# EUROPEAN PATENT SPECIFICATION

(11) **EP 3 269 586 B1**
(45) Date of publication and mention of the grant of the patent: **29.04.2020**
(21) Application number: 17181090.6
(22) Date of filing: 13.07.2017
(51) Int. Cl.: B60N 2/02, B60N 2/06, B60N 2/10, B60N 2/16, B60N 2/18

(54) **A ONE-PIECE TILTING ADJUSTABLE SEAT FOR SPORTS CARS**
EINTEILIGER, KIPPBARER SITZ FÜR SPORTAUTOS
SIÈGE BASCULANT EN UNE PIÈCE POUR VOITURES DE SPORT

(30) Priority: 15.07.2016 IT 201600074410
(43) Date of publication of application: 17.01.2018
(73) Proprietor: Sabelt S.p.A., 10129 Torino (IT)
(72) Inventor: CASTELLI, Pier Guido, 10020 PECETTO TORINESE (Torino) (IT)
(74) Representative: Fioravanti, Corrado

(56) References cited:
- WO-A1-98/32627
- DE-A1- 3 243 747
- DE-A1- 3 522 285
- GB-A- 2 054 731
- US-A- 1 545 269

## Description

### Technical field

The present invention refers to a motor vehicle seat, in particular an adjustable seat with a one-piece structure, particularly suitable for sports cars.

### Background art

As is well known, seats with a one-piece structure are particularly appreciated in sports cars for many reasons. For example, such seats have less overall weight compared to conventional seats and allow them to lighten the car altogether, while improving its performance overall. Moreover, the seats with a one-piece structure are generally considered safer, as the structure forms a kind of shell wherein the driver is accommodated.

More than any other aspect, however, the sports car driver appreciates the overall rigidity of the one-piece seat both due to its single-body structure and the particularly rigid mounting on the vehicle's floor. This allows the driver to better perceive the movements of the vehicle. However, such seats have some disadvantages, and in particular they often force the driver to assume an uncomfortable driving position, especially if the driver is particularly tall or short.

WO 98/32627 A1 discloses a motor vehicle seat as defined in the preamble of claim 1.

### Summary of the invention

The object of the present invention is to provide a seat with a one-piece structure, particularly for sports cars, which meets the requirements of the sector and at the same time overcomes the disadvantages mentioned above.

The aforementioned and other objects and advantages are achieved with an adjustable seat with a one-piece structure according to claim 1. The claims dependent on claim 1 disclose variant embodiments. In summary, a seat for a motor vehicle comprises a one-piece structure forming a seat bottom and a backrest. The one-piece structure is associated with a height adjustment mechanism of the one-piece structure and a tilting control system for adjusting the inclination of the one-piece structure. A different inclination of the seat bottom allows the distance between the front edge of the seat bottom and the pedal area to be adjusted.

### Brief description of the drawings

The features and advantages of the seat according to the present invention will be apparent from the description hereinafter, provided by way of non-limiting example. Reference is made to the appended drawings, wherein:
- figure 1 is a rear perspective view of a seat according to the present invention mounted in the passenger compartment of a vehicle;
- figure 2 is a front perspective view of the seat of figure 1;
- figure 3 is an exploded perspective view of the seat of figures 1 and 2;
- figure 4 shows the seat of figures 1 and 2 according to a side view of the door side of the vehicle;
- figure 5 shows the seat of figures 1 and 2, according to a side view from the center (or tunnel side) of the vehicle;
- figure 6 is a side view illustrating the seat adjusted in three different inclined positions;
- figure 7 is a partial side view of another embodiment of the seat;
- figures 8 and 9 are side views of two further embodiments of the seat and the tilting control system;
- figures 10 to 12 are perspective views, from different angles, of parts of an additional embodiment of the seat;
- figure 13 is a bottom view of the seat of figures 10-12; and
- figures 14 to 17 are schematic perspective views of a yet another embodiment.

### Detailed description

With reference to the accompanying figures, a seat with a one-piece structure is collectively indicated at 1, which may be housed in the passenger compartment of a vehicle, in particular, a sports car.

The vehicle is provided with a floor panel 2, for example consisting of a series of crosspieces 3 extending along a transverse direction with respect to the longitudinal direction of straight-line travel in the vehicle.

Throughout the present description and in the claims, the terms and expressions indicating positions and orientations refer to the installed condition in a motor vehicle. Thus, the expression "inner side" indicates a side facing the vehicle center and the expression "outer side" indicates a side facing a side door of the vehicle. Terms such as "front" and "rear" refer to the vehicle's direction of travel. "Side" indicates a side parallel to the longitudinal direction of operation.

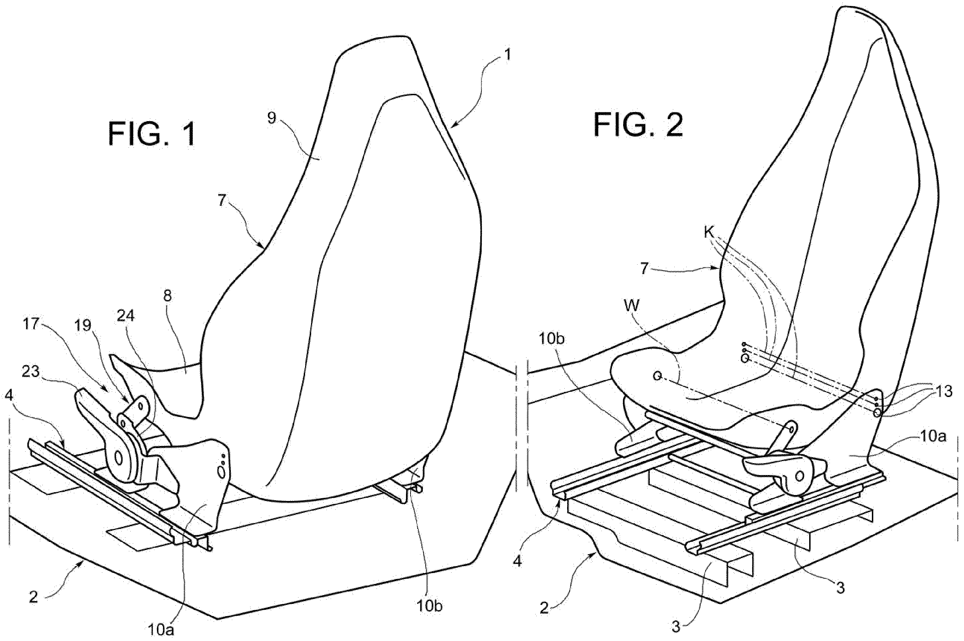

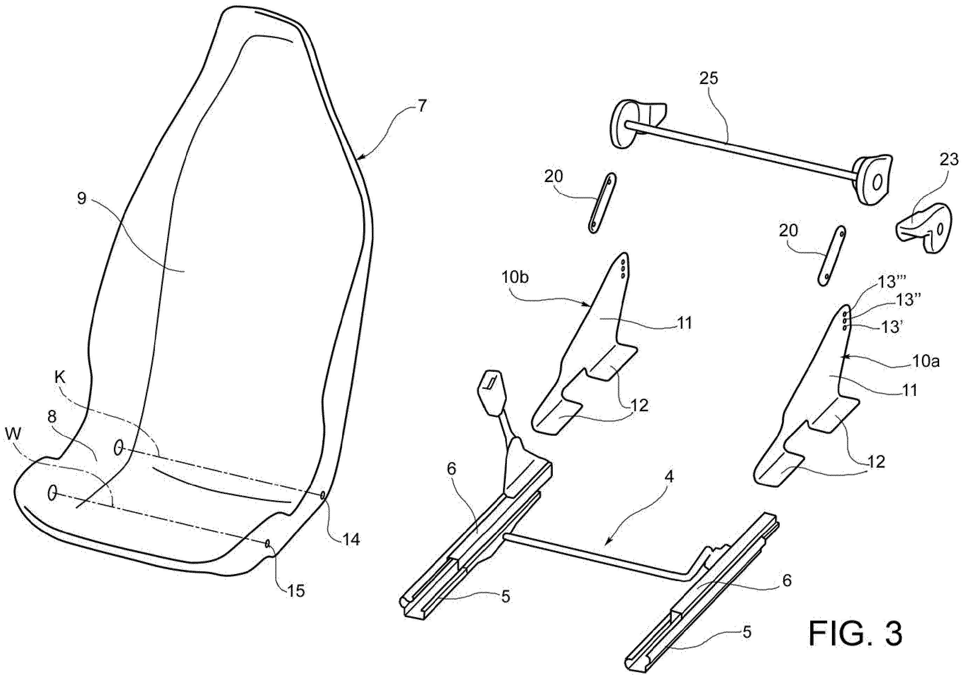

The seat 1 may be connected rigidly to the floor panel 2 or, as shown in figures 1 and 2, by means of conventional sliding guides 4 which allow the longitudinal seat position to be adjusted. The guides 4, illustrated separately in figure 3, are known in the art and do not require being described herein in detail. It is enough to note here that the guides 4 comprise rails 5 fixed to the floor panel and slides 6 fixed to the seat, slidably coupled with the rails 5 and lockable with respect to the same.

The seat 1 comprises a one-piece structure 7, i.e. a monocoque structure, which forms a seat bottom 8 and a backrest 9. The seat 1 further comprises a pair of side brackets 10a, 10b fixed on two opposite longitudinal sides of the seat bottom 8. The side brackets 10a, 10b are fixable either to the floor panel 2 or to the movable slides 6 of the guides 4.

Each bracket 10a, 10b comprises a main body 11, e.g. in the form of a plate, and a connecting portion 12 in a single piece with the main body 11, e.g. arranged on a plane orthogonal to that of the main body in the form of a plate.

According to the illustrated example, the connecting portion comprises two wings bent with respect to the main body 11, longitudinally spaced and fixable to the movable slide 6 of the guide 4.

Each side bracket 10a, 10b is provided with a plurality of vertical adjustment catches, preferably in the form of through openings. The openings in the two brackets define a plurality of pairs of catches, aligned in pairs along a plurality of respective horizontal geometric axes at different heights with respect to a horizontal reference plane (e.g., the imaginary plane defined by the floor panel of the vehicle).

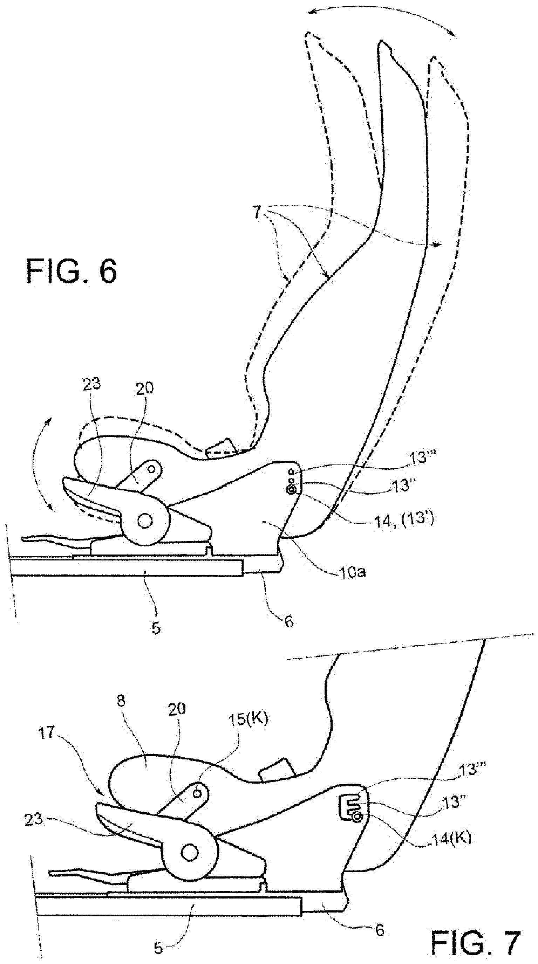

According to the invention, the bracket 10a, 10b is provided with three height adjustment catches 13', 13", 13"'. In the example of figures 1-6, the adjustment catches are in the form of separate through holes formed in each side bracket 10a, 10b. In the example of figure 7, the adjustment catches in each side bracket are formed by a single shaped opening which has different interconnecting branches (three in this example), each of which forms one of said height adjustment catches.

The one-piece structure 7 may be made of a rigid and lightweight material, e.g. carbon fiber composite material. Alternatively, other materials may be used, e.g. fiberglass or fiberglass and carbon mixed, or thermoplastic materials.

The seat 1 further comprises at least one height adjustment element 14, which may be alternatively and selectively engageable with a seat of the height adjustment aperture(s) 13', 13", 13'" of the bracket 10a, 10b.

In the illustrated example, the height adjustment element 14 is a horizontal pin protruding externally from the structure 7, preferably in the junction area between the seat bottom 8 and backrest 9. Two height adjustment elements 14 are provided, protruding from opposite sides, one toward the door side and the other towards the center (or tunnel side) of the car, aligned along a same height adjustment horizontal axis K. The pins 14 may be fixed or rotatable with respect to the horizontal axis thereof.

Once the height adjustment elements 14 are aligned in the desired two respective height adjustment holes 13', 13", 13"', the same are locked by respective threaded fixing means.

The seat 1 also comprises two tilting control elements 15. Preferably, the tilting control elements 15 are two horizontal pins fixed to the structure 7 and protruding externally from opposite sides of the front of the side area of the seat bottom 8. The two pins 15 protrude one toward the door side and the other toward the center (or tunnel side) of the car, and are aligned along the same horizontal transverse axis W of the tilting control (figure 3).

Moreover, the seat 1 comprises a tilting control system 17 designed to cause the tilt of the one-piece structure 7 around each of the horizontal axes defined by each of the pairs of vertical adjustment catches 13. The tilt movement adjusts the inclination of the structure 7 around the axis defined by the pair of catches wherein the pins 14 are engaged. The tilting control system allows the inclination of the structure 7 to be fixed in the desired angular position.

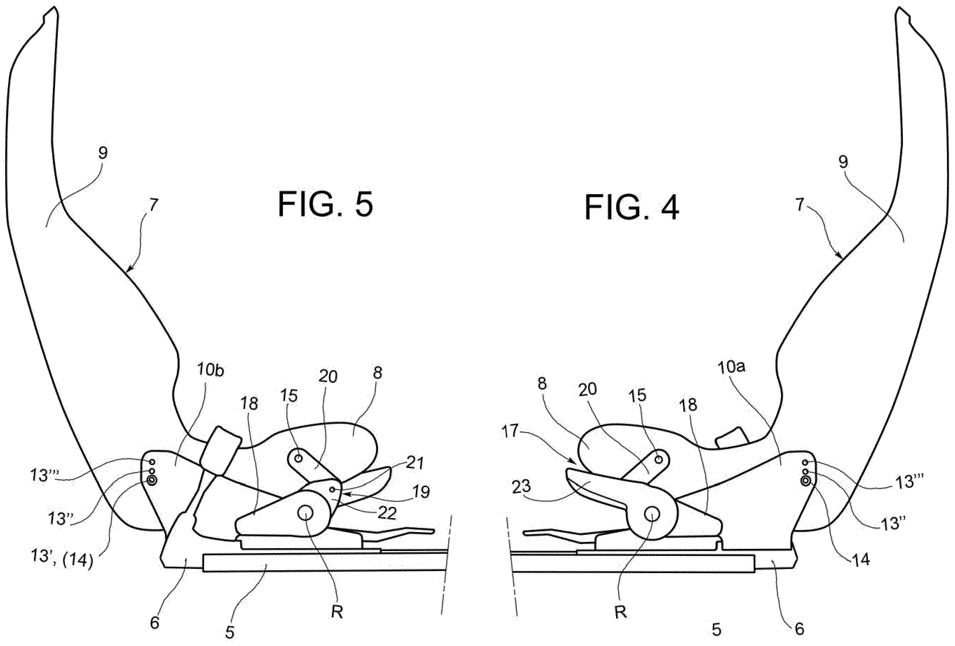

The tilting control system (or mechanism) may be realized in various alternative embodiments. According to the embodiment illustrated in figures 4 and 5, the tilting control system comprises, on the inside of the car (figure 5), an articulated leverage 19, secured to the seat bottom 8 and to the bracket 10b, in this example, by means of a support 18, and hence to the movable slide 6 of the longitudinal adjustment guide. The leverage 19 may include an upper connecting rod (or lever) 20 having an end hinged to the seat bottom 8 around the tilting pin 15 and an opposite end 21 hinged to a lower connecting rod or lever 22 mounted rotatably on the bracket 10a around a horizontal axis R. The lever 22 is lockable and unlockable rotationally around the axis R by means of a lever control device. The lever control device, of a type known per se, comprises a manual control lever 23, which may be lifted in opposition to the elastic action of a recall spring (not shown).

The tilting control system of this embodiment uses a continuous or discontinuous mechanism with a lever control of a type known per se, already used for tilting the seats of motor vehicles; these mechanisms, being known in the art, do not need to be described in detail. Purely by way of example, a device marketed by the Faurecia company, model RD77 may be used.

Lifting of the manual control lever 23 causes the disengagement of a toothed element 24 from the lower lever 22 or the rotation of the aforementioned mechanism and consequently of the lower lever 22, according to the type of adjusting mechanism used. In the disengaged state of the discontinuous mechanism, the user may oscillate the one-piece structure 7 around the tilting axis. The lower lever 22 follows the oscillation of the structure 7 by rotating around the horizontal axis R, and the angle between levers 20 and 22 varies. Once the desired inclination of the structure 7 is reached, the manual control lever 23 is released, and the toothed element 24 locks the rotation of the second lever 22, thereby stopping the one-piece structure 7 in the desired inclination.

A second articulated leverage (figure 5), symmetrical with the articulated leverage 19 on the door side (figure 4), but without a manual lever, is mounted on the bracket 10b on the opposite side (towards the center of the car or tunnel side). The lower levers 22 of the two leverages may be joined in rotation by a horizontal bar 25 (figure 3).

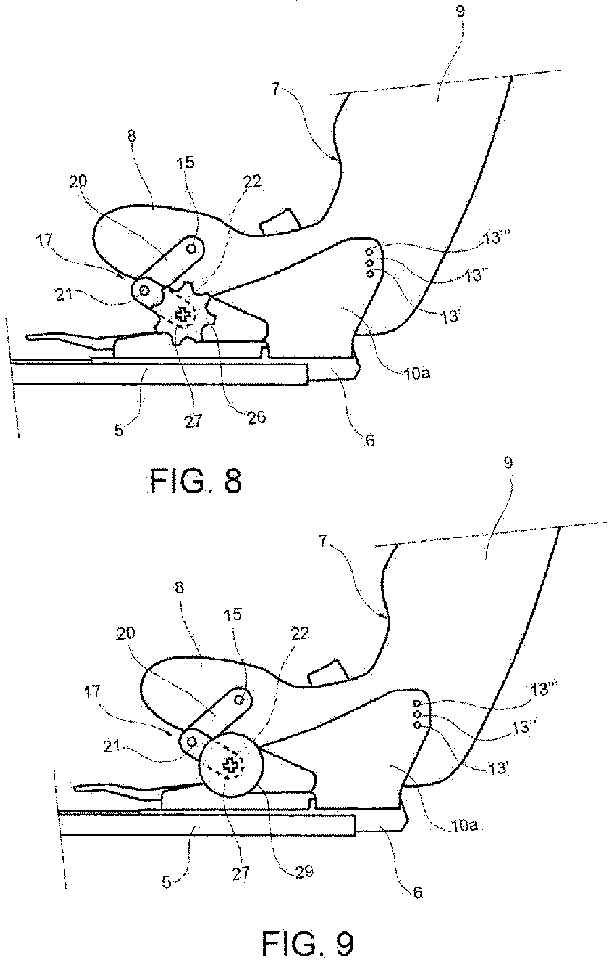

In an alternative embodiment (figure 8), the tilting control system may comprise a continuous, conventional-type adjuster used for adjusting the inclination of the backrest of non-one-piece type seats, or the tilt of the cushions only. A rotatable knob 26, mounted on the side bracket 10a, controls in rotation a horizontal pin 27, e.g. a grooved pin. The pin 27 controls the continuous adjuster which in turn rotates a lever 22 of an articulated leverage 19 secured to the seat bottom 8 and to the bracket 10a. The leverage 19 includes an upper connecting rod (or lever) having an end hinged to the seat bottom 8 around the tilting pin 15 and an opposite end 21 hinged to a lower connecting rod or lever 22 mounted rotatably on the bracket 10a around a horizontal axis R. The rotation of the pin 27 causes the angle to vary between the connecting rods, varying the inclination angle of the one-piece structure 7.

According to a further alternative embodiment (figure 9), the tilting control system may comprise a geared motor 29 mounted on the side bracket 10a. The geared motor controls in rotation a horizontal shaft 27. The geared motor is coupled to an articulated leverage, similar to that of figure 8. The shaft rotation 27 causes the angle variation between the connecting rods 20 and 22, varying the inclination angle of the one-piece structure.

The shaft 27 may be realized as a grooved shaft that engages a toothed sector formed by the lower connecting rod 22 which is mounted rotatably on the bracket 10a around a horizontal axis parallel to that of the shaft 27. The rotation of the shaft causes the rotation of the lower connecting rod 22, and consequently the angle between the connecting rods, by varying the inclination angle of the one-piece structure.

In all the embodiments of the invention, the two leverages on the left side (door side) and right side (tunnel side) of the seat may be joined by a horizontal connecting bar similar to the bar 25 illustrated in figure 3.

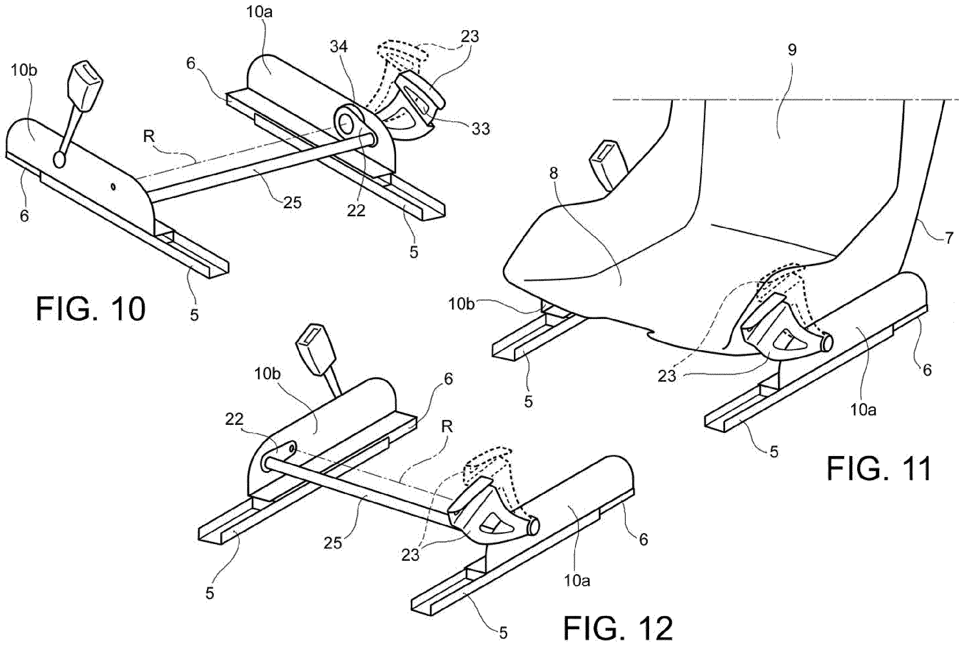

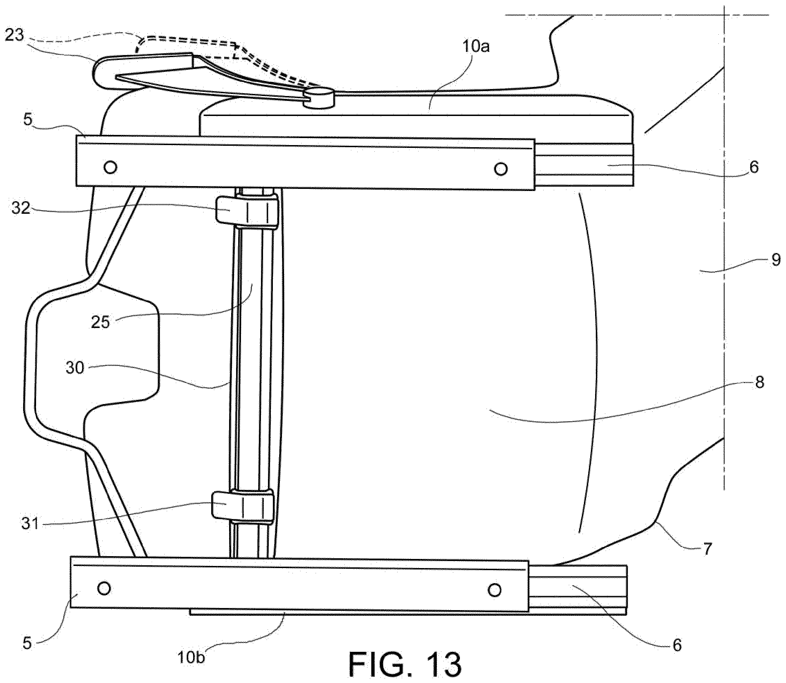

According to a further embodiment, illustrated in figures 10-13, a horizontal connecting bar 25 joins the two levers 22 that are part of the leverage 19 toward the door side and the leverage toward the tunnel side (or car center) respectively. Each lever 22 is rotatably mounted on the respective bracket 10a, 10b around a horizontal axis R. The door side lever 22 is lockable and unlockable rotatably around the axis R by means of a manual lever control device 23. Such a system may use the previously indicated continuous and discontinuous mechanisms. Instead of the manual lever 23, an electric geared motor may be used. The connecting bar 25 is mounted at the free ends of the levers 22 and is at least partially housed in a transverse groove 30 formed in the seat bottom 8 (figure 13).

On the seat bottom, one or more retaining elements 31, 32 may be arranged, which hold (from below) the connecting bar 25 engaged in the groove 30 and therefore engaged with the one-piece structure 7 of the seat.

The connecting bar 25, incorporated at least partially or in any case mounted on the one-piece structure 7, increases its structural strength.

The manual control lever 23 is illustrated in two operational positions, locked and unlocked. According to an embodiment, the lever 23 advantageously has a vertically flattened design in a vertical longitudinal plane, to occupy little space and to be easily operated by the user. For this purpose, the manual control lever 23 has a flattened main body, for example made from a shaped plate, wherein one or more through openings 33 may be made to be gripped by the driver with two fingers.

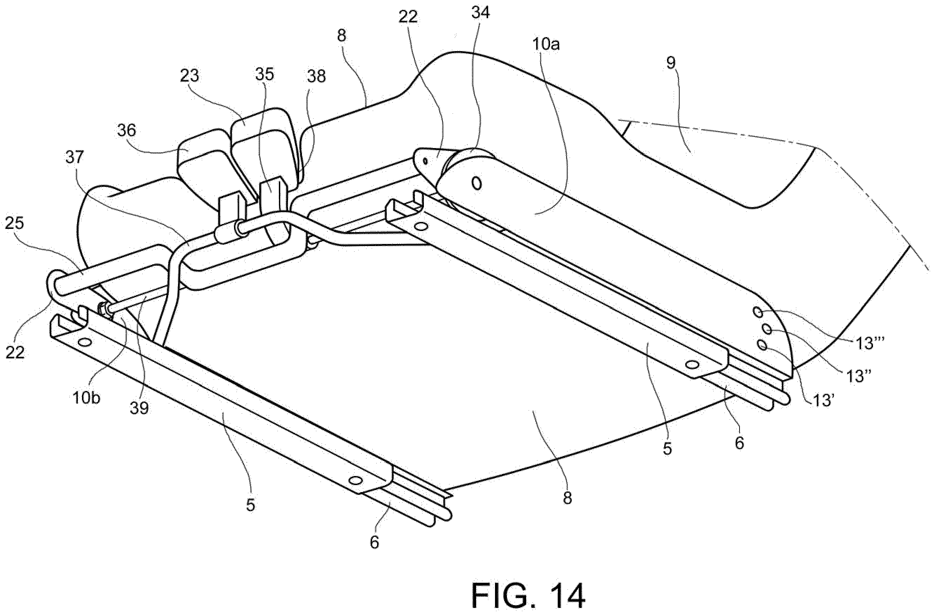

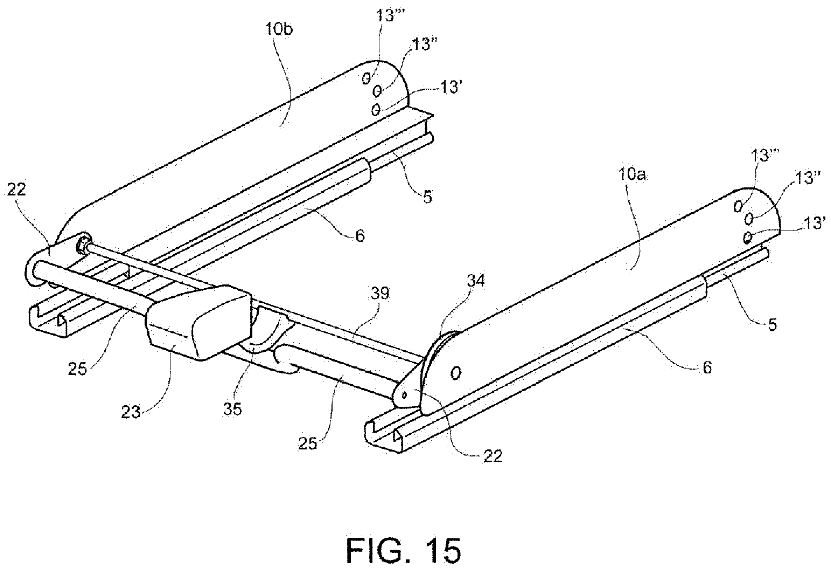

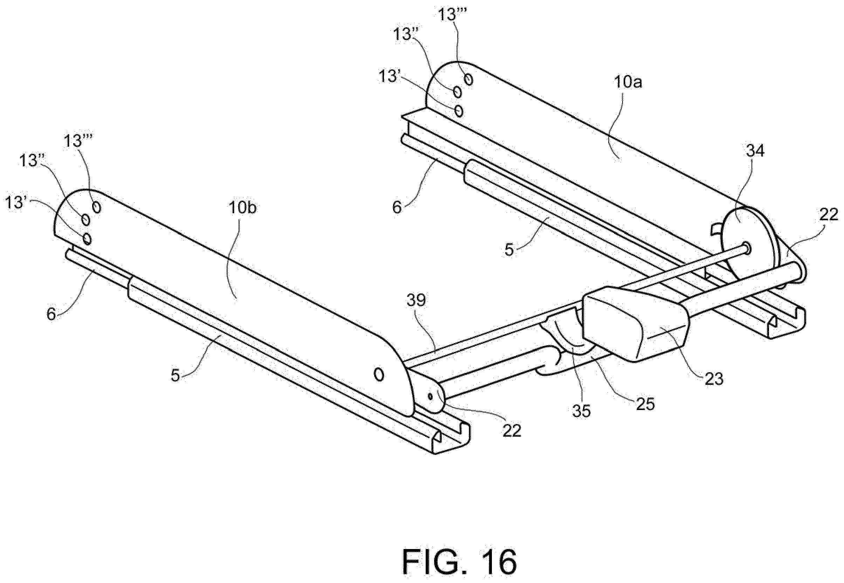

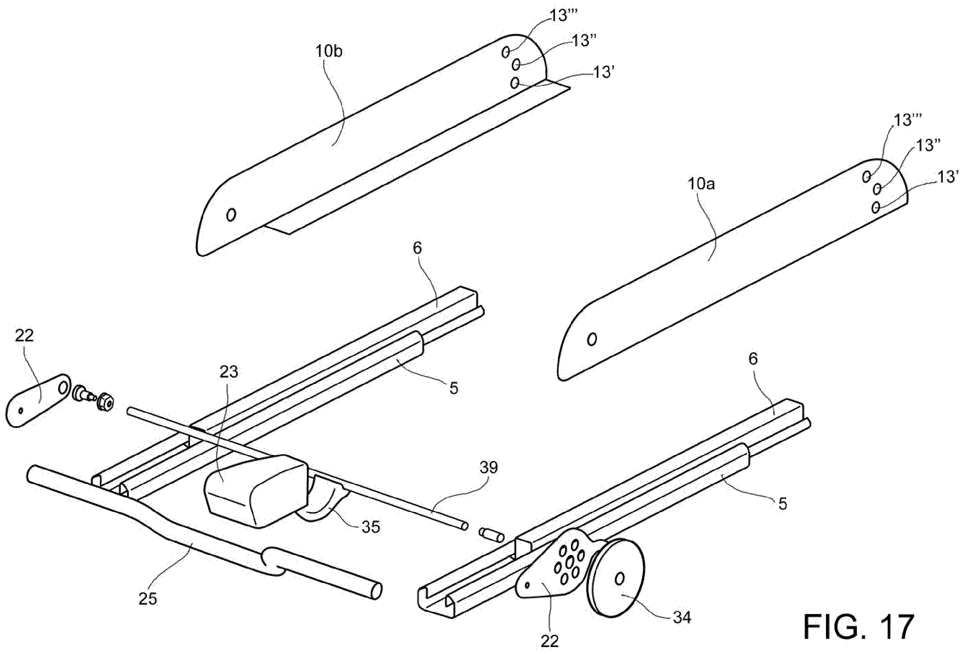

According to an embodiment, illustrated in figures 14-17, a horizontal connecting bar 25 joins the two levers 22, being part, respectively, of the leverage 19 toward the door side and the leverage toward the tunnel side (or car center). Each lever 22 is rotatably mounted on the respective bracket 10a, 10b around a horizontal axis R.

An adjusting mechanism 34, e.g. of a discontinuous type known per se, is interposed between the lever 22 arranged on the door side and the bracket 10a. A horizontal rod 39 extends transversely along the axis R between the two levers 22 and is connected in rotation to the adjusting mechanism 34 but not to the levers 22. A manual control lever 23 is joined in rotation to the horizontal rod 34 by means of an arm 35.

The connecting bar 25 is held at least partially in the seat bottom 8 or is in any case fastened to the seat bottom 8 in another manner (e.g., by means of rings or hooks) to rotate with the one-piece structure 7 around the horizontal axis W of the tilting control.

In the example illustrated in figure 14, the manual control lever 23 is located at the center of the front part of the seat bottom 8. In this particular embodiment, the front part of the seat forms a recess 38, which is open at the front, which houses the end part of the control lever 23 and a further lever 36 is used for unlocking the longitudinal seat adjustment system, including a conventional control bar 37. The connecting bar 25 is, in this example, bent in an elbow to allow the passage of the arm 35 and the lever 36 for the longitudinal adjustment of the seat.

By pulling the manual control lever 23 upward, the driver causes the rod 39 to rotate, resulting in the unlocking of the adjusting mechanism 34 connected thereto. The driver, sitting on the seat, may tilt it forward or backward. Once the desired inclination is reached, the driver releases the manual control lever 23, so the adjusting mechanism 34 locks in the angular position reached by the lever 22 around the geometric axis R.

Also the variants of figure 14-17 may use a continuous or discontinuous adjusting mechanism as indicated above. By using a continuous mechanism, the same will be associated with a control knob or geared motor, as in the previous examples.

An elastic recall element (not shown) may be associated with the lever 22 to force the same to a predetermined angular position, such as lowered in front.

As one may appreciate, the seat of a one-piece structure according to the present invention meets the requirements of the sector, as it is light and rigid, and overcomes the disadvantages of the driver assuming an uncomfortable position, as it allows both a height adjustment and an adjustment of the inclination of the supporting one-piece structure.

One will also appreciate that the possibility to adjust the inclination of the seat allows one not only to choose the inclination for the driver's back, but also to vary the distance of the front edge of seat bottom 8 from the foot pedal. A higher position of the front edge of the seat increases the distance between the seat and the pedals, with the same longitudinal position of the seat. Conversely, a more horizontal orientation of the seat approaches the front end of the seat to the pedals, adapting to a shorter driver.

The variation of the angle of inclination is not limiting. Indicatively, it may be between 10° and 20° in a vertical longitudinal oscillation plane.

In all embodiments, the choice of the type of adjusting mechanism, continuous or discontinuous, is not to be considered limiting.

Various aspects and embodiments of the seat have been described. The invention, moreover, is not limited to the described embodiments, but may be varied within the scope defined by the appended claims.

## Claims

1. A motor vehicle seat (1), comprising:
a one-piece structure (7) forming a seat bottom (8) and a backrest (9);
a height adjustment mechanism (14) operable to adjust and fix the height of the one-piece structure (7); and
a tilting control system (17), operable for adjusting and fixing the inclination of the structure (7);
**characterized in that**
the height adjustment mechanism (14) is provided with a pair of side brackets (10a, 10b) fixable on two respective opposite sides of the seat, each bracket being fixable to a floor panel (2) of the motor vehicle or movable slides (6) of guides (4) for adjusting the longitudinal position of the seat;
each side bracket (10a, 10b) has a plurality of catches (13) for height adjustment, aligned in pairs along a plurality of horizontal geometrical axes located at different heights;
provided on two opposite sides of the one-piece structure (7) are two height adjustment elements (14) selectively engageable in one of the pairs of catches (13) for height adjustment of both the side brackets (10a, 10b);
wherein the elements (14) for height adjustment comprise a pair of pins projecting from two opposite sides of the one-piece structure (7) in a connection zone between the seat bottom (8) and the backrest (9), and wherein the catches (13) of height adjustment are through openings, wherein
the adjustment catches (13) are either in the form of separate through holes (13', 13", 13'") formed in each side bracket (10a, 10b), or
the adjustment catches (13) in each side bracket (10a, 10b) are formed by a single shaped opening which has different interconnecting branches, each of which forms one of said height adjustment catches; and wherein
the tilting control system (17) either comprises, on each of two opposite sides of the seat bottom (8), an articulated leverage (19), which includes an upper lever (20) articulated to the seat bottom (8) and a lower lever (22) articulated to the upper lever (20) and to a respective bracket (10a, 10b); or
wherein the tilting control system (17) comprises:
on each of two opposite sides of the seat bottom (8), a leverage (19) with a lever (22) having a first end pivotally mounted to a respective bracket (10a, 10b) and a second end;
a horizontal bar (25) which connects the second ends of the levers (22), the connecting bar (25) being mounted on the seat bottom (8) of the one-piece structure (7).

2. A seat according to claim 1, wherein the horizontal bar (25) is housed at least partially in a groove (30) formed in the bottom of the seat bottom (8).

3. A seat according to claim 1 or 2, wherein the system (17) of the tilting control system comprises a locking and unlocking device with a manual control lever (23) associated to a toothed locking element (24) engageable with one of the two levers (19) and disengageable therefrom, to lock the inclination of the one-piece structure (7) or allow it to tilt around any of the horizontal axes defined by the pairs of catches (13) for height adjustment.

4. A seat according to any one of claims 1 to 3, wherein the tilting control system (17) comprises a rotatable knob (26) mounted on one of the side brackets (10a), where the knob (26) controls the rotation of one of the levers (20, 22) to lock the inclination of the one-piece structure (7) or control the tilting thereof about a horizontal axis defined by any one of the pairs of catches (13) for vertical adjustment.

5. A seat according to any one of claims 1 to 3, wherein the tilting control system (17) comprises a geared motor (29) that controls the rotation of one of the levers (20, 22) to lock the inclination of the one-piece structure (7) or control the tilting thereof about a horizontal axis defined by any one of the pairs of catches (13) for vertical adjustment.

6. A seat according to any one of the preceding claims, wherein the tilting control system (17) comprises a locking and unlocking device with a manual control lever (23) to lock the inclination of the one-piece structure (7) or allow it to tilt, wherein the manual control lever (23) is mounted adjacent to a side of the seat, has a flattened body extending in a longitudinal vertical plane and provides one or more through openings (33) formed in the flattened body to allow the driver to grasp and operate the lever with his fingers.

7. A seat according to any one of the preceding claims, wherein
the seat bottom (8) has a front edge with a central recess (38) open at the front; and
at least one manual control lever (23, 36), for adjusting the position and/or the inclination of the seat, is accommodated at least partially in the recess (38).

## Patentansprüche

1. Kraftfahrzeugsitz (1), aufweisend:
eine einteilige Anordnung (7), die eine Sitzfläche (8) und eine Rückenlehne (9) bildet;
einen Höhenjustierungsmechanismus (14), der zur Einstellung und Fixierung der Höhe der einteiligen Anordnung (7) einsetzbar ist; und
ein Kipp-Steuerungssystem (17), das zur Einstellung und Fixierung der Neigung der Anordnung (7) einsetzbar ist;
**dadurch gekennzeichnet, dass**
der Höhenjustierungsmechanismus (14) mit einem Paar seitlicher Halterungen (10a, 10b) versehen ist, welche an zwei entsprechenden entgegengesetzten Seiten des Sitzes befestigbar sind, wobei jede Halterung an einer Bodenplatte (2) des Kraftfahrzeugs oder an beweglichen Schlitten (6) von Führungen (4) zur Einstellung der Längsposition des Sitzes befestigt werden kann;
jede seitliche Halterung (10a, 10b) eine Vielzahl von Rasten (13) zur Höhenjustierung aufweist, welche paarweise entlang einer auf verschiedenen Höhen befindlichen Vielzahl horizontaler geometrischer Achsen ausgerichtet sind;
an zwei entgegengesetzten Seiten der einteiligen Anordnung (7) zwei Höhenjustierungselemente (14) vorgesehen sind, die wahlweise in eines der Paare von Rasten (13) zur Höhenjustierung der beiden seitlichen Halterungen (10a, 10b) einrasten können;
wobei die Elemente (14) zur Höhenjustierung ein Paar von Stiften aufweisen, welche in einer Verbindungszone zwischen der Sitzfläche (8) und der Rückenlehne (9) von zwei entgegengesetzten Seiten der einteiligen Anordnung (7) vorstehen, und wobei die Rasten (13) zur Höhenjustierung Durchgangsöffnungen sind, wobei
die Justierrasten (13) entweder in Form von in jeder seitlichen Halterung (10a,10b) ausgebildeten separaten Durchgangsöffnungen (13', 13", 13"') vorhanden sind oder
die Justierrasten (13) in jeder seitlichen Halterung (10a, 10b) durch eine einzelne geformte Öffnung ausgebildet sind, welche verschiedene Verbindungsäste aufweist, von denen jeder eine der Justierrasten bildet; und wobei
das Kipp-Steuerungssystem (17) entweder auf jeder der beiden entgegengesetzten Seiten der Sitzfläche (8) einen Gelenkhebel (19) aufweist, der einen oberen Hebelarm (20), welcher mit der Sitzfläche (8) durch ein Gelenk verbunden ist, und einen unteren Hebelarm (22), welcher mit dem oberen Hebelarm (20) und einer entsprechenden Halterung (10a, 10b) durch ein Gelenk verbunden ist, aufweist; oder
wobei das Kipp-Steuerungssystem (17) aufweist:
eine Hebelanordnung (19) mit einem Hebelarm (22) mit einem ersten Ende, das schwenkbar an einer entsprechenden Halterung (10a, 10b) montiert ist, und einem zweiten Ende, an jeder der beiden entgegengesetzten Seiten der Sitzfläche (8);
eine Querstange (25), die die zweiten Enden der Hebelarme (22) verbindet, wobei die Verbindungsstange (25) an der Sitzfläche (8) der einteiligen Anordnung (7) angebracht ist.

2. Sitz nach Anspruch 1, wobei die Querstange (25) zumindest teilweise in einer in der Unterseite der Sitzfläche (8) ausgebildeten Einkerbung (30) untergebracht ist.

3. Sitz nach Anspruch 1 oder 2, wobei das System (17) des Kipp-Steuerungssystems eine Ver- und eine Entriegelungsvorrichtung mit einem Handsteuerhebel (23) aufweist, der mit einem gezahnten Verriegelungselement (24) verbunden ist, welches mit einem der beiden Hebelarme (19) in Eingriff bringbar und von diesem entkoppelbar ist, um die Neigung der einteiligen Anordnung (7) zu arretieren oder deren Kippung um eine der von den Paaren von Rasten (13) zur Höhenverstellung definierten Horizontalachsen zu erlauben.

4. Sitz nach einem der Ansprüche 1 bis 3, wobei das Kipp-Steuerungssystem (17) einen an einer der seitlichen Halterungen (10a) angebrachten Drehknauf (26) aufweist, wo der Knauf (26) die Rotation eines der Hebelarme (20, 22) steuert, um die Neigung der einteiligen Anordnung (7) zu arretieren oder deren Kippung um eine Horizontalachse, welche durch eines der Paare von Rasten (13) zur Vertikaleinstellung festgelegt wird, zu steuern.

5. Sitz nach einem der Ansprüche 1 bis 3, wobei das Kipp-Steuerungssystem (17) einen Getriebemotor (29) aufweist, welcher die Rotation eines der Hebelarme (20, 22) steuert, um die Neigung der einteiligen Anordnung (7) zu arretieren oder deren Kippung um eine Horizontalachse, welche durch eines der Paare von Rasten (13) zur Vertikaleinstellung festgelegt wird, zu steuern.

6. Sitz nach einem der vorangehenden Ansprüche, wobei das Kipp-Steuerungssystem (17) eine Ver- und Entriegelungsvorrichtung mit einem Handsteuerhebel (23) aufweist, um die Neigung der einteiligen Anordnung (7) zu arretieren oder deren Kippung zu erlauben, wobei der Handsteuerhebel (23) benachbart einer Seite des Sitzes angebracht ist, einen abgeflachten, sich in einer vertikalen Längsebene erstreckenden Körper aufweist und eine oder mehrere Durchgangsöffnungen (33) bereitstellt, welche in dem abgeflachten Körper ausgebildet sind, um dem Fahrer zu ermöglichen, den Hebel mit seinen Fingern zu ergreifen und zu betätigen.

7. Sitz nach einem der vorangehenden Ansprüche, wobei
die Sitzfläche (8) eine Vorderkante mit einer zentralen Aussparung (38) aufweist, die an der Vorderseite offen ist; und
zumindest ein Handsteuerhebel (23, 36) zum Einstellen der Position und/oder der Neigung des Sitzes zumindest teilweise in der Aussparung (38) untergebracht ist.

## Revendications

1. Siège de véhicule à moteur (1), comprenant :
une structure en une pièce (7) formant une assise de siège (8) et un dossier (9) ;
un mécanisme de réglage de hauteur (14) servant à régler et fixer la hauteur de la structure en une pièce (7) ; et
un système de commande de basculement (17) servant à régler et fixer l'inclinaison de la structure (7) ;
**caractérisé en ce que**
le mécanisme de réglage de hauteur (14) est doté d'une paire de supports latéraux (10a, 10b) pouvant être fixés sur deux côtés opposés respectifs du siège, chaque support pouvant être fixé à un panneau de plancher (2) du véhicule à moteur ou à des glissières mobiles (6) de guides (4) pour régler la position longitudinale du siège ;
chaque support latéral (10a, 10b) possède une pluralité d'éléments de retenue (13) pour le réglage en hauteur, alignés par paires le long d'une pluralité d'axes géométriques horizontaux situés à différentes hauteurs ;
prévus sur deux côtés opposés de la structure en une pièce (7) se trouvent deux éléments de réglage de hauteur (14) pouvant être mis en prise de manière sélective dans l'une des paires d'éléments de retenue (13) pour le réglage en hauteur des deux supports latéraux (10a, 10b) ;
dans lequel les éléments (14) destinés au réglage de hauteur comprennent une paire de broches faisant saillie depuis deux côtés opposés de la structure en une pièce (7) dans une zone de liaison entre l'assise de siège (8) et le dossier (9), et dans lequel les éléments de retenue (13) de réglage en hauteur sont des ouvertures traversantes, où
les éléments de retenue de réglage (13) se présentent sous la forme de trous traversants séparés (13', 13", 13"') formés dans chaque support latéral (10a, 10b), ou
les éléments de retenue de réglage (13) dans chaque support latéral (10a, 10b) sont formés par une ouverture de forme simple qui possède différentes ramifications d'interconnexion, chacune formant l'un desdits éléments de retenue pour réglage en hauteur ; et dans lequel
le système de commande de basculement (17) comprend, sur chacun des deux côtés opposés de l'assise de siège (8), un levier articulé (19), lequel inclut un levier supérieur (20) articulé sur l'assise de siège (8) et un levier inférieur (22) articulé sur le levier supérieur (20) et sur un support (10a, 10b) respectif ; ou bien
dans lequel le système de commande de basculement (17) comprend :
sur chacun des deux côtés opposés de l'assise de siège (8), un levier (19) avec un levier (22) ayant une première extrémité montée de manière pivotante sur un support (10a, 10b) respectif et une seconde extrémité ;
une barre horizontale (25) qui relie les secondes extrémités des leviers (22), la barre de connexion (25) étant montée sur l'assise de siège (8) de la structure en une pièce (7).

2. Siège selon la revendication 1, dans lequel la barre horizontale (25) est logée au moins partiellement dans une rainure (30) formée dans la partie inférieure de l'assise de siège (8).

3. Siège selon la revendication 1 ou 2, dans lequel le système (17) du système de commande de basculement comprend un dispositif de verrouillage et de déverrouillage avec un levier de commande manuelle (23) associé à un élément de verrouillage denté (24) pouvant être mis en prise avec l'un des deux leviers (19) et pouvant être mis hors prise de celui-ci, pour verrouiller l'inclinaison de la structure en une pièce (7) ou lui permettre de basculer autour de l'un quelconque des axes horizontaux définis par les paires d'éléments de retenue (13) destinés au réglage en hauteur.

4. Siège selon l'une quelconque des revendications 1 à 3, dans lequel le système de commande de basculement (17) comprend un bouton rotatif (26) monté sur l'un des supports latéraux (10a), où le bouton (26) commande la rotation d'un des leviers (20, 22) pour verrouiller l'inclinaison de la structure en une pièce (7) ou commander le basculement de celle-ci autour d'un axe horizontal défini par l'une quelconque des paires d'éléments de retenue (13) destinés au réglage vertical.

5. Siège selon l'une quelconque des revendications 1 à 3, dans lequel le système de commande de basculement (17) comprend un moteur à engrenages (29) qui commande la rotation d'un des leviers (20, 22) pour verrouiller l'inclinaison de la structure en une pièce (7) ou commander le basculement de celle-ci autour d'un axe horizontal défini par l'une quelconque des paires d'éléments de retenue (13) destinés au réglage vertical.

6. Siège selon l'une quelconque des revendications précédentes, dans lequel le système de commande de basculement (17) comprend un dispositif de verrouillage et de déverrouillage avec un levier de commande manuelle (23) pour verrouiller l'inclinaison de la structure en une pièce (7) ou lui permettre de basculer, dans lequel le levier de commande manuelle (23) est monté de manière adjacente à un côté du siège, possède un corps aplati s'étendant dans un plan vertical longitudinal et fournit une ou plusieurs ouvertures traversantes (33) formées dans le corps aplati pour permettre au conducteur de saisir et d'actionner le levier avec ses doigts.

7. Siège selon l'une quelconque des revendications précédentes, dans lequel
l'assise de siège (8) possède un bord avant avec un évidement central (38) ouvert à l'avant ; et
au moins un levier de commande manuelle (23, 36), pour régler la position et/ou l'inclinaison du siège, est logé au moins partiellement dans l'évidement (38).
